(19) Europäisches Patentamt / European Patent Office / Office européen des brevets

(11) **EP 4 730 687 A1**

(12) **EUROPEAN PATENT APPLICATION**
published in accordance with Art. 153(4) EPC

(43) Date of publication:
**22.04.2026 Bulletin 2026/17**

(21) Application number: **24844786.4**

(22) Date of filing: **23.07.2024**

(51) International Patent Classification (IPC):
**H04L 5/00** (2006.01)

(52) Cooperative Patent Classification (CPC):
**H04L 5/00; H04W 72/0453**

(86) International application number:
**PCT/CN2024/107117**

(87) International publication number:
**WO 2025/021095 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.07.2023 CN 202310922332**

(71) Applicant: **Huawei Technologies Co., Ltd.**
**Shenzhen, Guangdong 518129 (CN)**

(72) Inventors:
• **WANG, Han**
**Shenzhen, Guangdong 518129 (CN)**
• **HUANG, Su**
**Shenzhen, Guangdong 518129 (CN)**
• **LI, Cheng**
**Shenzhen, Guangdong 518129 (CN)**

(74) Representative: **Maiwald GmbH**
**Elisenhof**
**Elisenstraße 3**
**80335 München (DE)**

(54) **SIGNAL CONFIGURATION METHOD, APPARATUS AND SYSTEM**

(57) This application provides a signal configuration method, an apparatus, and a system, and may be applied to the field of communication technologies, to improve positioning precision. The method includes: A terminal device receives first configuration information, and configures a reference signal based on the first configuration information, where the reference signal corresponds to at least two subbands on a same time domain resource, and adjacent subbands in the at least two subbands are separated in frequency domain by at least one frequency domain unit.

FIG. 7

**Description**

This application claims priority to Chinese Patent Application No. 202310922332.4, filed with the China National Intellectual Property Administration on July 25, 2023 and entitled "SIGNAL CONFIGURATION METHOD, APPARATUS, AND SYSTEM", which is incorporated herein by reference in its entirety.

**TECHNICAL FIELD**

This application relates to the field of communication technologies, and in particular, to a signal configuration method, an apparatus, and a system.

**BACKGROUND**

A carrier phase positioning technology is currently one of main methods for high-precision positioning. In this technology, a distance between a transmit end and a receive end may be measured by measuring a carrier phase change of a reference signal from the transmit end to the receive end.

Currently, a reference signal used in the carrier phase positioning technology is a sounding reference signal (sounding reference signal, SRS) or a positioning reference signal (positioning reference signal, PRS) signal. However, performance that can be achieved by the reference signal currently used in the carrier phase positioning technology may fail to meet positioning requirements in some scenarios.

**SUMMARY**

Embodiments of this application provide a signal configuration method, an apparatus, and a system, to configure a reference signal, and improve a positioning effect.

To achieve the foregoing objectives, the following technical solutions are used in embodiments of this application.

According to a first aspect, a signal configuration method is provided. The method may be performed by a terminal device, or may be performed by a module (for example, a processor, a chip, or a chip system) used in the terminal device. The following uses an example in which the terminal device performs the method for description. The method includes: The terminal device receives first configuration information, and configures a reference signal based on the first configuration information, where the reference signal corresponds to at least two subbands on a same time domain resource, and adjacent subbands in the at least two subbands are separated in frequency domain by at least one frequency domain unit.

Based on the signal configuration method provided in this embodiment of this application, a reference signal that occupies different frequency domain resources on a same time domain resource may be configured, to improve positioning precision, reduce load, and improve a signal to interference plus noise ratio (signal interference noise ratio, SINR) of an overall signal.

According to a second aspect, a signal configuration method is provided. The method may be performed by an access network device, or may be performed by a module (for example, a processor, a chip, or a chip system) used in the access network device. The following uses an example in which the access network device performs the method for description. The method includes: The access network device generates first configuration information, and sends the first configuration information, where the first configuration information is for corresponding to at least two subbands on a same time domain resource, and adjacent subbands in the at least two subbands are separated in frequency domain by a reference signal with at least one frequency domain unit.

With reference to the first aspect or the second aspect, in a possible design, the first configuration information includes first indication information, where the first indication information indicates a first frequency domain resource; and the first configuration information further includes second indication information, where the second indication information indicates positions of the at least two subbands in the first frequency domain resource.

Based on the signal configuration method provided in this embodiment of this application, one first frequency domain resource may be configured by using the first indication information, and a position of a subband of the reference signal in the first frequency domain resource may be configured by using corresponding second indication information, to configure the reference signal. In a design of configuring the position of the subband of the reference signal in the first frequency domain resource by using the second indication information, for a multi-subband reference signal, resource overheads of separately configuring a frequency domain position and a bandwidth for each subband can be reduced, and the multi-subband reference signal can occupy different frequency domain resources on a same time domain resource.

With reference to the first aspect or the second aspect, in a possible design, the first configuration information includes third indication information, where the third indication information indicates an interval between a frequency domain position of a subband other than a first subband in the at least two subbands and a frequency domain position of the first subband.

Based on the signal configuration method provided in this embodiment of this application, a multi-subband reference signal may be configured by configuring one subband and an offset of another subband relative to the subband. In a design of configuring a frequency domain position of another subband by using an offset indicated by the third indication information, for the multi-subband reference signal, resource overheads of separately configuring a frequency domain position and a bandwidth for each subband can be reduced, and the multi-subband reference signal can occupy different frequency domain resources on a same time domain resource.

With reference to the first aspect or the second aspect, in a possible design, the first configuration information includes fourth indication information, where the fourth indication information indicates identification information of signal sequences corresponding to the at least two subbands, and the identification information of the signal sequence is for generating the signal sequence.

Based on the signal configuration method provided in this embodiment of this application, different signal sequences may be configured for different subbands by using different fourth indication information, so that different signal sequences can be generated for different subbands of the reference signal, to reduce a peak-to-average power ratio (peak-to-average power ratio, PAPR) of an overall signal.

With reference to the first aspect or the second aspect, in a possible design, the first configuration information includes at least one of fifth indication information and sixth indication information, where the fifth indication information indicates comb structure sizes corresponding to the at least two subbands, and the sixth indication information indicates reference signals corresponding to transmit powers of the at least two subbands.

Based on this solution, the comb structure sizes and/or the reference signals corresponding to the transmit powers of the at least two subbands of the reference signal may be configured.

With reference to the first aspect or the second aspect, in a possible design, each of the at least two subbands occupies a same quantity of frequency domain units.

Based on this solution, a frequency domain resource size may be configured for each subband of the reference signal based on same configuration information, to reduce signaling overheads.

With reference to the first aspect or the second aspect, in a possible design, the at least two subbands are located in a same bandwidth part BWP.

Based on this solution, a BWP in which each subband of the reference signal is located may be configured based on same configuration information, to reduce signaling overheads.

According to a third aspect, a communication apparatus is provided, to implement various methods. The communication apparatus includes a corresponding module, unit, or means (means) for implementing the methods. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects and the possible implementations of the foregoing aspects.

In some possible designs, the transceiver module may include a transceiver circuit, a transceiver machine, a transceiver, or a communication interface.

According to a fourth aspect, a communication apparatus is provided, and includes a processor and a memory. The memory is configured to store computer instructions, and when the processor executes the instructions, the communication apparatus is caused to perform the method according to any one of the aspects.

According to a fifth aspect, a communication apparatus is provided, and includes a processor and a communication interface. The communication interface is configured to communicate with a module outside the communication apparatus, and the processor is configured to execute a computer program or instructions, to cause the communication apparatus to perform the method according to any one of the foregoing aspects.

According to a sixth aspect, a communication apparatus is provided, and includes at least one processor. The processor is configured to execute a computer program or instructions stored in a memory, to cause the communication apparatus to perform the method according to any one of the foregoing aspects. The memory may be coupled to the processor, or may be independent of the processor.

According to a seventh aspect, a computer-readable storage medium is provided. The computer-readable storage medium stores a computer program or instructions. When the computer program or the instructions are run on a communication apparatus, the communication apparatus is caused to perform the method according to any one of the foregoing aspects.

According to an eighth aspect, a computer program product including instructions is provided. When the computer program product runs on a communication apparatus, the communication apparatus is caused to perform the method according to any one of the foregoing aspects.

According to a ninth aspect, a communication apparatus (for example, the communication apparatus may be a chip or a chip system) is provided. The communication apparatus includes a processor, configured to implement the functions in any one of the aspects.

In some possible designs, the communication apparatus includes a memory, and the memory is configured to store necessary program instructions and data.

In some possible designs, when the apparatus is a chip system, the apparatus may include a chip, or may include a chip and another discrete component.

The communication apparatus according to any one of the third aspect to the ninth aspect may be the terminal device in the first aspect, or an apparatus, for example, a chip or a chip system, included in the terminal device. Alternatively, the communication apparatus may be the access network device in the second aspect, or an apparatus, for example, a chip or a chip system, included in the access network device.

It may be understood that when the communication apparatus according to any one of the third aspect to the ninth aspect is a chip, a sending action/function of the communication apparatus may be understood as outputting information, and a receiving action/function of the communication apparatus may be understood as inputting information.

For technical effects brought by any design of the third aspect to the ninth aspect, refer to the technical effects brought by different designs of the first aspect and the second aspect. Details are not described herein again.

According to a tenth aspect, a communication system is provided. The communication system includes a terminal device and an access network device. The terminal device is configured to implement the method according to the first aspect, and the access network device is configured to implement the method according to the second aspect.

## BRIEF DESCRIPTION OF DRAWINGS

FIG. 1 is a diagram of ranging in a carrier phase positioning technology;

FIG. 2 is a diagram of an SRS;

FIG. 3 is a diagram of a 5G core network positioning network architecture based on an NG-RAN;

FIG. 4 is a diagram of a positioning network architecture based on a PC5 interface;

FIG. 5 is a diagram of a structure of a communication system according to an embodiment of this application;

FIG. 6 is a diagram of a structure of a communication apparatus according to an embodiment of this application;

FIG. 7 is a schematic flowchart of a signal configuration method according to an embodiment of this application;

FIG. 8 is a diagram 1 of reference signal distribution according to an embodiment of this application;

FIG. 9 is a diagram 2 of reference signal distribution according to an embodiment of this application;

FIG. 10 is a diagram of a DS-RS according to an embodiment of this application;

FIG. 11 is a diagram of a positioning procedure according to an embodiment of this application; and

FIG. 12 is a diagram of a structure of another communication apparatus according to an embodiment of this application.

## DESCRIPTION OF EMBODIMENTS

For ease of understanding of the technical solutions in embodiments of this application, the following first briefly describes technologies related to this application.

1. Carrier phase positioning technology

The carrier phase positioning technology is currently one of main methods for high-precision positioning. In this technology, a distance with an integer ambiguity is measured by measuring a carrier phase change of a reference signal from a transmit end to a receive end. Therefore, when a carrier phase integer ambiguity can be correctly solved, carrier phase ranging can theoretically achieve centimeter-level to millimeter-level precision, to obtain a high-precision positioning result.

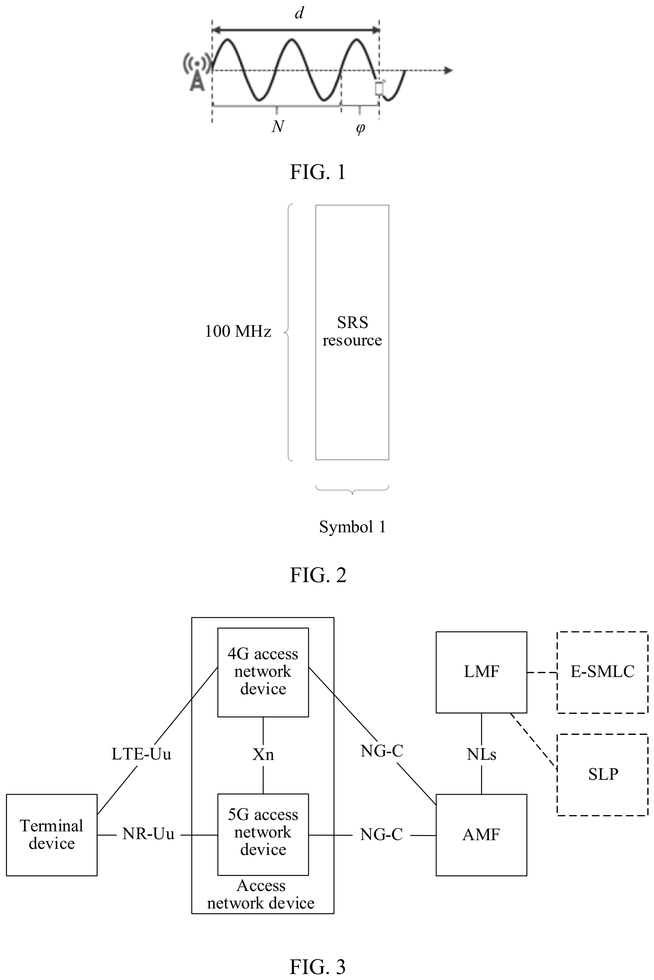

FIG. 1 is a diagram of ranging in a carrier phase positioning technology. $d$ is a distance between a receive end and a transmit end; $\varphi$ is a carrier phase measurement value; $N$ represents an integer ambiguity, is an integer, and represents that N whole carrier cycles have elapsed; and $\lambda$ is a carrier wavelength. The distance d and the carrier phase $\varphi$ satisfies the following formula:

$$d = \lambda \left( N + \frac{\varphi}{2\pi} \right) \qquad \qquad \text{Formula (1).}$$

Currently, a reference signal used in the carrier phase positioning technology is an existing SRS signal or PRS signal. The SRS signal is an uplink reference signal, and the PRS signal is a downlink reference signal. If the SRS signal is used, a terminal device may configure and send the SRS signal based on configuration information that is sent by a network side and that is for configuring the SRS signal, and the network side may measure the received SRS signal to position the terminal device. If the PRS signal is used, the network side may send the PRS signal, and the terminal device may measure the received PRS signal to position a device sending the PRS signal on the network side.

According to an existing configuration method, the existing SRS signal or PRS signal occupies all resources corresponding to a configured bandwidth on a same symbol (symbol). For example, as shown in FIG. 2, assuming that the network side configures a symbol 1 and a bandwidth of 100 MHz for the SRS signal, the SRS signal occupies all resources corresponding to 100 MHz on the symbol 1.

2. Positioning network architecture based on a next-generation-radio access network (Next-Generation-Radio Access Network, NG-RAN)

For example, a 5th generation (5th generation, 5G) core network positioning network architecture based on the NG-RAN is shown in FIG. 3, and mainly includes the following network functions and entities: a terminal device, an access and mobility management function (access and mobility management function, AMF) network element, a location management function (location management function, LMF) network element, and an access network device. The access network device includes a 4th generation (4th generation, 4G) access network device connected to a 5G core network and a 5G access network device. Optionally, the positioning network architecture may further include an enhanced serving mobile location center (enhanced serving mobile location center, E-SMLC) network element and a secure user plane location (secure user plane location, SUPL) protocol location platform (SUPL location platform, SLP) network element.

The terminal device communicates with the 4G access network device through an LTE-Uu interface, and communicates with the 5G access network device through an NR-Uu interface. The 4G access network device communicates with the 5G access network device through an Xn interface. The AMF network element communicates with the 4G access network device and the 5G access network device through NG-C interfaces. The AMF network element communicates with the LMF network element through an NLs interface.

In the positioning network architecture, the AMF network element is mainly responsible for receiving a positioning service request that is initiated by another network element in the network and that is related to a terminal device, and sending the received request to the LMF network element. The LMF network element is responsible for processing the received positioning request and initiates a related positioning procedure. The access network device is mainly responsible for sending and receiving a positioning reference signal, and obtaining related measurement information.

There may be one or more terminal devices, for example, a first terminal device, a second terminal device, and a third terminal device. The terminal device may be a terminal device having a transceiver function, or may be a chip or a chip system disposed in the terminal device. The terminal device may also be referred to as user equipment (user equipment, UE), a terminal, an access terminal, a subscriber unit (subscriber unit), a subscriber station, a mobile station (mobile station, MS), a remote station, a remote terminal, a mobile terminal (mobile terminal, MT), a mobile device, a user terminal, a wireless communication device, a user agent, a user apparatus, or the like.

The terminal device in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer with a wireless transceiver function, a virtual reality (virtual reality, VR) terminal, an augmented reality (augmented reality, AR) terminal, a smart home device (such as a refrigerator, a television, an air conditioner, or a meter), a smart robot, a robot arm, a workshop device, a wireless terminal in industrial control (industrial control), a wireless terminal in self-driving (self-driving), a wireless terminal in telemedicine (remote medical), a wireless terminal in a smart grid (smart grid), a wireless terminal in transportation security (transportation safety), a wireless terminal in a smart city (smart city), a wireless terminal in a smart home (smart home), a vehicle-mounted terminal, a roadside unit (roadside unit, RSU) or the like with a terminal function, a flight device (for example, a smart robot, a hot air balloon, an unmanned aerial vehicle, or an airplane), or the like. The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The terminal device may alternatively be another device having a terminal function. For example, the terminal device may alternatively be a device that functions as a terminal in device to device (device to device, D2D) communication.

In embodiments of this application, a device form of the terminal device is not limited. An apparatus configured to implement a function of the terminal device may be a terminal device, or may be an apparatus, for example, a chip system, that can support the terminal device in implementing the function. The apparatus may be installed in the terminal device or used in cooperation with the terminal device. In embodiments of this application, the chip system may include a chip, or may include a chip and another discrete component.

There may be a plurality of access network devices, for example, a first access network device, a second access network device, and a third access network device. The access network device may be a device having a wireless transceiver function, or may be a chip or a chip system disposed in the device. The access network device is located in an access network (access network, AN) of the communication system, and is configured to provide an access service for the terminal. For example, the access network device may be referred to as a radio access network device (radio access network, RAN) device, and may be specifically a next-generation mobile communication system, for example, a 6G access network device, for example, a 6G base station. Alternatively, in the next-generation mobile communication system, the access network device may be named in another manner, and all naming manners fall within the protection scope of embodiments of this application. This is not limited in this application. Alternatively, the access network device may include a gNB in 5G, for example, a new radio (new radio, NR) system, or one or a group of antenna panels (including a plurality of antenna panels) of a base station in the 5G. Alternatively, the access network device may be a network node that forms the gNB, a transmission and reception point (transmission and reception point, TRP, or transmission point, TP), or a transmission measurement function (transmission measurement function, TMF), for example, a central unit (central unit, CU), a distributed unit (distributed unit, DU), a CU-control plane (control plane, CP), or a CU-user plane (user plane, UP), a wireless unit (radio unit, RU), an RSU having a base station function, a wired access gateway, a 5G core network element. Alternatively, the access network device may further include an access point (access point, AP), a wireless relay node, a wireless backhaul node, macro base stations in various forms, a micro base station (also referred to as a small cell), a relay station, an access point, a wearable device, an in-vehicle device, and the like in a wireless fidelity (wireless fidelity, Wi-Fi) system.

The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the access network device may be a CU node, a DU node, or a device including the CU node and the DU node. In addition, the CU may be classified as an access network device in an access network RAN, or the CU may be classified as an access network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

In embodiments of this application, a form of the access network device is not limited. An apparatus configured to implement a function of the access network device may be an access network device, or may be an apparatus, for example, a chip system, that can support the access network device in implementing the function. The apparatus may be installed in the access network device or used with the access network device.

3. Positioning network architecture based on a PC5 interface

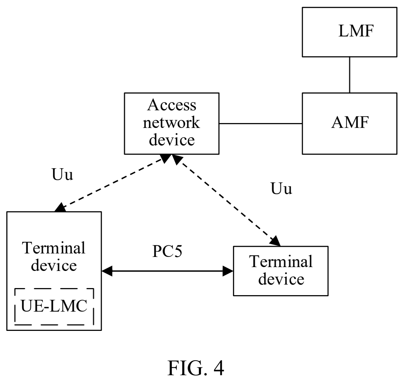

For example, the positioning network architecture based on the PC5 interface is shown in FIG. 4, and mainly includes the following network functions and entities: a terminal device, an AMF network element, an LMF network element, and an access network device. Optionally, in the positioning network architecture, a location management component (UE-Location Management Component, UE-LMC) may be deployed on the terminal device. The UE-LMC is a component/an application that is deployed on the terminal device and that has a part of LMF functions, and the UE-LMC is configured to support a positioning service on the PC5 interface.

Different terminal devices communicate with each other through the PC5 interface. The access network device communicates with the terminal device through a Uu interface.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, unless otherwise specified, "a plurality of" means two or more. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In embodiments of this application, "indication" may include a direct indication and an indirect indication, or may include an explicit indication and an implicit indication. Information indicated by a piece of information (for example, the following first indication information, second indication information, or third indication information) is referred to as to-be-indicated information. In a specific implementation process, the to-be-indicated information is indicated in a plurality of manners. For example, but not limited to, the to-be-indicated information, for example, the to-be-indicated information or an index of the to-be-indicated information, may be directly indicated. Alternatively, the to-be-indicated information may be indirectly indicated by indicating other information, and an association relationship exists between the other information and the to-be-indicated information. Alternatively, only a part of the to-be-indicated information may be indicated, and another part of the to-be-indicated information is known or agreed in advance. For example, specific information may further be indicated by using a pre-agreed (for example, protocol-specified) arrangement sequence of each piece of information to reduce indication overheads to some extent. In addition, a common part of each piece of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmit end device by sending configuration information to a receive end device.

In embodiments of this application, "predefinition", "predefining", "preconfiguration", or "preconfiguring" may be implemented by pre-storing corresponding code or a corresponding table in a device, or may be implemented in another manner that may indicate related information. A specific implementation of thereof is not limited in embodiments of this application. "Storing" may mean "being stored" in one or more memories. The one or more memories may be separately disposed, or may be integrated into an encoder or a decoder, a processor, or a communication apparatus. Alternatively, a part of the one or more memories may be separately disposed, and a part of the one or more memories may be integrated into a decoder, a processor, or a communication apparatus. A type of the memory may be a storage medium in any form. This is not limited in embodiments of this application.

A "protocol" in embodiments of this application may be a protocol family in the communication field, a standard protocol with a frame structure similar to the protocol family, or a related protocol applied to a future communication system. This is not specifically limited in embodiments of this application.

In embodiments of this application, descriptions such as "when...", "in a case of...", and "if" all mean that a device performs corresponding processing in an objective case, and are not intended to limit time, and the device is not required to perform a determining action during implementation, and do not mean any other limitation.

The technical solutions in embodiments of this application may be applied to various communication systems, for example, a wireless network (Wi-Fi) system, a V2X communication system, a D2D communication system, a 4G mobile communication system, for example, an LTE system, a worldwide interoperability for microwave access (worldwide interoperability for microwave access, WiMAX) communication system, a 5G mobile communication system, for example, a new radio (new radio, NR) system, and a future communication system.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

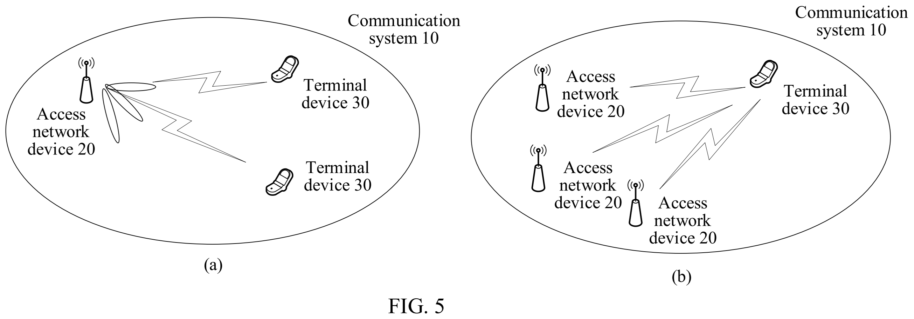

For ease of understanding embodiments of this application, a communication system shown in FIG. 5 is first used as an example to describe in detail a communication system applicable to embodiments of this application.

For example, as shown in (a) and (b) in FIG. 5, a communication system 10 to which the signal configuration method provided in embodiments of this application is applicable may include one or more access network devices 20 and one or more terminal devices 30. The access network device 20 may communicate with the terminal device 30 in a wireless manner. As shown in (a) in FIG. 5, a single access network device may transmit data or control signaling to one or more terminal devices. As shown in (b) in FIG. 5, a plurality of access network devices may alternatively simultaneously transmit data or control signaling to a single terminal device.

An example in which the access network device 20 interacts with the terminal device 30 shown in FIG. 5 is used. In the signal configuration method provided in embodiments of this application, the access network device 20 sends first configuration information to the terminal device 30, and correspondingly, the terminal device 30 obtains the first configuration information. The terminal device 30 configures a reference signal based on the first configuration information, where the reference signal corresponds to at least two subbands on a same time domain position, and adjacent subbands in the at least two subbands are separated in frequency domain by at least one frequency domain unit. Specific implementations and technical effects of this solution are described in detail in subsequent method embodiments, and details are not described.

Optionally, a communication system to which the signal configuration method provided in embodiments of this application is applicable may be located in a network architecture shown in FIG. 3 or FIG. 4.

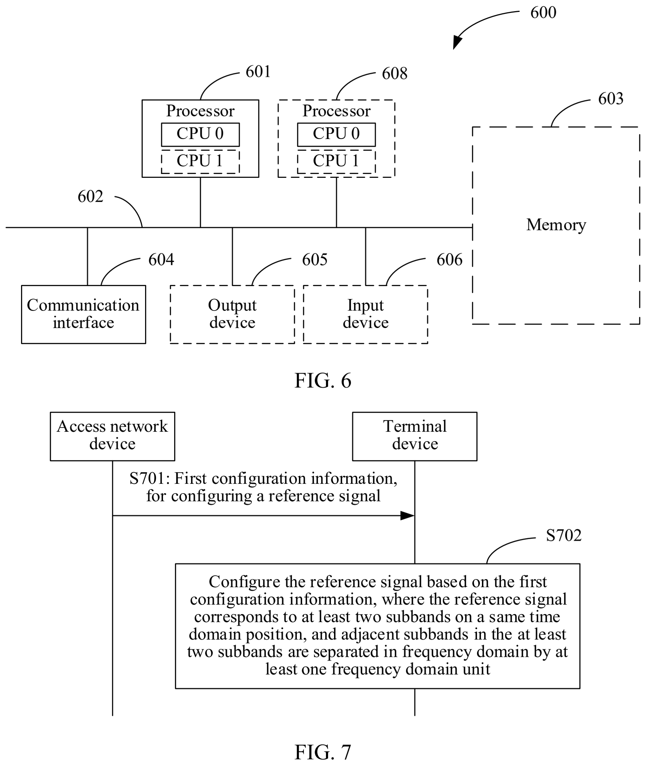

Optionally, the access network device 20 or the terminal device 30 may use a structure of a communication apparatus 600 shown in FIG. 6. As shown in FIG. 6, the communication apparatus 600 includes a processor 601, a communication line 602, and at least one communication interface (where FIG. 6 is described merely by using an example in which the communication apparatus 600 includes a communication interface 604). Optionally, the communication apparatus 600 may further include a memory 603.

The processor 601 may be a general-purpose central processing unit (central processing unit, CPU), a microprocessor, an application-specific integrated circuit (application-specific integrated circuit, ASIC), or one or more integrated circuits configured to control program execution in the solutions of this application.

The communication line 602 may include a path for information transmission between the foregoing components.

The communication interface 604 is configured to communicate, by using any apparatus like a transceiver, with another device or a communication network, for example, an ethernet, a radio access network (radio access network, RAN), or a wireless local area network (wireless local area networks, WLAN).

The memory 603 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, or the like), a magnetic disk storage medium or another magnetic storage device, or any other medium that can be accessed by a computer and that can be configured to carry or store expected program code in a form of instructions or a data structure, but is not limited thereto. The memory may exist independently, and is connected to the processor through the communication line 602. The memory may alternatively be integrated with the processor.

The memory 603 is configured to store computer-executable instructions for executing the solutions of this application, and the processor 601 controls the execution. The processor 601 is configured to execute the computer-executable instructions stored in the memory 603, to implement the method provided in the following embodiments of this application.

Optionally, the computer-executable instructions in embodiments of this application may also be referred to as application program code or computer program code. This is not specifically limited in embodiments of this application.

In a specific implementation, in an embodiment, the processor 601 may include one or more CPUs, for example, a CPU 0 and a CPU 1 in FIG. 6.

In a specific implementation, in an embodiment, the communication apparatus 600 may include a plurality of processors, for example, the processor 601 and a processor 608 in FIG. 6. Each of the processors may be a single-core (single-CPU) processor, or may be a multi-core (multi-CPU) processor. The processor herein may be one or more devices, circuits, and/or processing cores configured to process data (for example, computer program instructions).

In a specific implementation, in an embodiment, the communication apparatus 600 may further include an output device 605 and an input device 606. The output device 605 communicates with the processor 601, and may display information in a plurality of manners. For example, the output device 605 may be a liquid crystal display (liquid crystal display, LCD), a light emitting diode (light emitting diode, LED) display device, a cathode ray tube (cathode ray tube, CRT) display device, or a projector (projector). The input device 606 communicates with the processor 601, and may receive an input of a user in a plurality of manners. For example, the input device 606 may be a mouse, a keyboard, a touchscreen device, or a sensor device.

It may be understood that the structure shown in FIG. 6 does not constitute a specific limitation on the communication apparatus 600. For example, in some other embodiments of this application, the communication apparatus 600 may include more or fewer components than those shown in the figure, or may combine some components, or may split some components, or may have different component arrangements. The components shown in the figure may be implemented by hardware, software, or a combination of the software and the hardware.

With reference to FIG. 1 to FIG. 6, the following describes in detail the signal configuration method provided in embodiments of this application by using an example in which the access network device 20 interacts with the terminal device 30 shown in FIG. 5.

It should be noted that names of messages between network elements, names of parameters in the messages, or the like in the following embodiments of this application are merely examples, and there may be other names in a specific implementation. This is not specifically limited in embodiments of this application.

FIG. 7 shows a procedure of a signal configuration method according to an embodiment of this application. In FIG. 7, an example in which the procedure is performed by a terminal device and an access network device is used for illustrating the method. However, an execution body of the procedure is not limited in this application. For example, the terminal device in FIG. 7 may alternatively be a module, for example, a chip, a chip system, or a processor used in the terminal device, or may be a logical node, a logical module, or software that can implement all or a part of functions of the terminal device. For example, the access network device in FIG. 7 may alternatively be a module, for example, a chip, a chip system, or a processor used in the access network device, or may be a logical node, a logical module, or software that can implement all or a part of functions of the access network device. The signal configuration method includes steps S701 and S702.

S701: The terminal device obtains first configuration information.

In S701, after generating the first configuration information, the access network device sends the first configuration information to the terminal device. The first configuration information is for configuring a reference signal.

Optionally, that the access network device sends the first configuration information to the terminal device may be triggered by a request message that is sent by another network element to the access network device and that is for requesting to configure the reference signal for the terminal device.

For example, if an LMF network element expects to position a terminal device, the LMF network element may send a request message to an access network device serving the terminal device, where the request message is for requesting to configure a reference signal for the terminal device. After receiving the request message, the access network device generates first configuration information and sends the first configuration information to the terminal device.

After receiving the first configuration information, the terminal device performs S702.

S702: The terminal device configures the reference signal based on the first configuration information, where the reference signal corresponds to at least two subbands on a same time domain position, and adjacent subbands in the at least two subbands are separated in frequency domain by at least one frequency domain unit.

The first configuration information may include information for configuring a time domain resource of the reference signal and information for configuring a frequency domain resource of the reference signal.

Optionally, the information for configuring the time domain resource of the reference signal may be for configuring a start time domain position of the reference signal and a length of an occupied consecutive time frequency resource. In a possible implementation, the information for configuring the time domain resource of the reference signal may be for configuring a time domain unit including the start time domain position of the reference signal and a quantity of consecutive time domain units occupied by the reference signal.

The time domain unit may be a slot (slot), a symbol (symbol), or another time domain unit. This is not specifically limited in embodiments of this application.

For example, assuming that a symbol (which may be referred to as a start symbol for short) including the start time domain position of the reference signal configured by using the first configuration information is a symbol 1, and the reference signal is configured to occupy two consecutive symbols in time domain, the reference signal configured based on the first configuration information may occupy a segment of consecutive time domain resources corresponding to the symbol 1 and a symbol 2 in time domain.

In this embodiment of this application, the reference signal configured by using the first configuration information may correspond to at least two subbands on a same time domain resource, and adjacent subbands in the at least two subbands are separated in frequency domain by at least one frequency domain unit.

The same time domain resource may include one or more time domain units.

In this embodiment of this application, a subband may be understood as a segment of consecutive frequency domain resources. One subband may occupy one or more frequency domain units.

Optionally, a frequency domain unit may be a resource occupied by a resource block (resource block, RB), a resource element (resource element, RE), or another resource unit in frequency domain. This is not specifically limited in embodiments of this application.

Optionally, the at least two subbands of the reference signal may be located in a same bandwidth part (bandwidth part, BWP).

Optionally, the first configuration information may be for configuring a plurality of subbands of the reference signal by configuring one frequency domain resource and a plurality of sets of corresponding configuration parameters.

The following describes specific implementations of configuring the subbands of the reference signal by using the first configuration information.

Implementation 1: The first configuration information includes first indication information, where the first indication information indicates a first frequency domain resource. In addition, the first configuration information further includes second indication information, where the second indication information indicates positions of the at least two subbands in the first frequency domain resource.

When the first indication information indicates the first frequency domain resource, optionally, the first indication information may indicate a start frequency domain position of the first frequency domain resource and a resource size of the first frequency domain resource. In a possible implementation, the first indication information may indicate a frequency domain unit including a start time domain position of the first frequency domain resource, and a quantity of frequency domain units included in the first frequency domain resource.

For example, assuming that the frequency domain unit is an RB, the first indication information may indicate a BWP in which the first frequency domain resource is located, and a quantity of resource blocks (resource block, RB) between the start frequency domain position of the first frequency domain resource and a start frequency domain position of the BWP, so that the terminal device can determine, based on the first indication information, an RB including the start frequency domain position of the first frequency domain resource. The first indication information may further indicate a quantity of RBs included in the first frequency domain resource, so that the terminal device can determine the first frequency domain resource with reference to the start frequency domain position of the first frequency domain resource. For example, assuming that the first indication information indicates that the start time domain position of the first frequency domain resource is an RB 0, and the first frequency domain resource includes 272 RBs, the terminal device may determine that the first frequency domain resource is a segment of consecutive frequency domain resources from the RB 0 to an RB 271.

Optionally, the first indication information may directly indicate the quantity of frequency domain units included in the first frequency domain resource. For example, the first indication information is a field, and a value of the field (for example, a decimal value converted from a bit value of the field) is the quantity of frequency domain units. Alternatively, the first indication information may indirectly indicate the quantity of frequency domain units included in the first frequency domain resource. The following describes an example of a manner of indirectly indicating the quantity of frequency domain units included in the first frequency domain resource.

In this manner, the terminal device and the access network device pre-agree/predefine/preconfigure a mapping relationship between a value of a parameter included in the first indication information and a quantity of frequency domain units. The access network device may indicate, by using the value of the parameter in the first indication information, the quantity of frequency domain units included in the first frequency domain resource. After receiving the first indication information, the terminal device determines the quantity of frequency domain units corresponding to the value of the parameter as the quantity of frequency domain units included in the first frequency domain resource.

For example, it is assumed that the first indication information includes a parameter freqHopping, and the parameter freqHopping includes a parameter $C_{SRS}$. In a preconfigured mapping relationship, there is a correspondence between a value of the parameter $C_{SRS}$ and a value of $m_{SRS,0}$, where the value of $m_{SRS,0}$ indicates the quantity of frequency domain units included in the first frequency domain resource. It is assumed that, in the preconfigured mapping relationship, when $C_{SRS}$ =0, corresponding $m_{SRS,0}$ =4; or when $C_{SRS}$ =9, corresponding $m_{SRS,0}$=32. In this case, if in the first indication information, $C_{SRS}$=0, the terminal device may determine that the first frequency domain resource includes four frequency domain units; or if in the first indication information, $C_{SRS}$=9, the terminal device may determine that the first frequency domain resource includes 32 frequency domain units.

The foregoing describes how the first indication information indicates the first frequency domain resource. Regarding how the second indication information indicates the positions of the at least two subbands in the first frequency domain resource, in a possible implementation, if the first frequency domain resource is divided into several segments of consecutive frequency domain resources, the second indication information may indicate which segments of frequency domain resources are occupied by the at least two subbands corresponding to the reference signal, to indicate a position of each subband in the first frequency domain resource. The following describes a specific implementation of dividing the first frequency domain resource into several segments of frequency domain resources.

Optionally, the first configuration information may include information indicating a quantity of resource segments into which the first frequency domain resource is divided.

The access network device may directly indicate the quantity of resource segments into which the first frequency domain resource is divided. For example, the indication information is a field, and a value of the field is the quantity of resource segments. Alternatively, the indication information may indirectly indicate the quantity of resource segments into which the first frequency domain resource is divided. For example, the terminal device and the access network device may pre-agree/predefine/preconfigure a mapping relationship between a value of a parameter included in the first configuration information and the quantity of resource segments. The access network device may indicate, by using the value of the parameter in the first configuration information, the quantity of segments into which the first frequency domain resource is to be divided.

Optionally, sizes of the segments of the first frequency domain resource may be the same or may be different.

Optionally, the first configuration information may include information indicating a quantity of frequency domain units included in each segment of the first frequency domain resource.

The information indicating the quantity of frequency domain units included in each segment of the first frequency domain resource may be carried in the first indication information or the second indication information, or may be information independent of the first indication information or the second indication information.

The information indicating the quantity of frequency domain units included in each segment of the first frequency domain resource may directly indicate the quantity of frequency domain units included in each segment of the first frequency domain resource. For example, the indication information is a field, and a value of the field is the quantity of frequency domain units included in each segment. Alternatively, the indication information may indirectly indicate the quantity of frequency domain units included in each segment of the first frequency domain resource. For example, the terminal device and the access network device may pre-agree/predefine/preconfigure a mapping relationship between a value of a parameter included in the first configuration information and the quantity of frequency domain units included in each segment of the first frequency domain resource. The access network device may indicate, by using the value of the parameter in the first configuration information, the quantity of frequency domain units included in each segment of the first frequency domain resource.

Further, the second indication information may indicate, based on segments of frequency domain resources into which the first frequency domain resource is divided, sequence numbers for one or more segments of frequency domain resources, and the terminal device may determine, based on the sequence numbers indicated by the second indication information, which segments of frequency domain resources are occupied by the at least two subbands corresponding to the reference signal. For example, if the second indication information indicates 1 and 4, it indicates that one subband is a $1^{st}$ segment of frequency domain resources in the first frequency domain resource, and the other subband is a $4^{th}$ segment of frequency domain resources in the first frequency domain resource. The sequence numbers for the segments of frequency domain resources into which the first frequency domain resource is divided may be determined based on a position order of the segments of frequency domain resources in frequency domain (for example, a descending order or an ascending order of frequency domain positions).

With reference to a specific example, the following describes a specific implementation in which the first indication information and the second indication information indicate the subbands of the reference signal.

For example, it is assumed that the first configuration information includes a parameter freqHopping and a parameter freqDomainPosition. The parameter freqHopping may include a parameter $C_{SRS}$ and a parameter $B_{SRS}$. It is assumed that a frequency domain unit is a frequency domain resource occupied by an RB. The terminal device and the access network device preconfigure a mapping relationship shown in Table 1.

Table 1

| $C_{SRS}$ | $B_{SRS} = 0$ | | $B_{SRS} = 1$ | | $B_{SRS} = 2$ | | $B_{SRS} = 3$ | |
|---|---|---|---|---|---|---|---|---|
| | $m_{SRS,0}$ | $N_0$ | $m_{SRS,1}$ | $N_1$ | $m_{SRS,2}$ | $N_2$ | $m_{SRS,3}$ | $N_3$ |
| 0 | 4 | 1 | 4 | 1 | 4 | 1 | 4 | 1 |
| ... | ... | ... | ... | ... | ... | ... | ... | ... |
| 9 | 32 | 1 | 6 | 2 | 8 | 2 | 4 | 2 |
| ... | ... | ... | ... | ... | ... | ... | ... | ... |
| 62 | 272 | 1 | 68 | 4 | 4 | 17 | 4 | 1 |
| 63 | 272 | 1 | 16 | 17 | 8 | 2 | 4 | 2 |

In Table 1, a value of $m_{SRS,0}$ corresponding to $C_{SRS}$ is the quantity of frequency domain units occupied by the first frequency domain resource. When $B_{SRS}=i$, a corresponding value of $N_i$ is for determining, with reference to values of $N_1$,

$N_2$, ..., and $N_{i-1}$, a quantity of segments into which the first frequency domain resource is divided, and a corresponding value of $m_{SRS,i}$ is a quantity of frequency domain units occupied by one segment of resources in the first frequency domain resource. A value of the parameter freqDomainPosition indicates which segment of frequency domain resources in the first frequency domain resource is occupied by each subband.

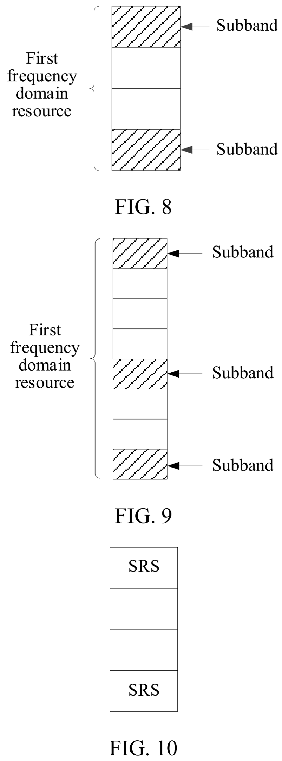

For example, it is assumed that $C_{SRS}$=9, $B_{SRS}$=2, and freqDomainPosition=1 and 4. As shown in Table 1, when $C_{SRS}$=9, in a row corresponding to $C_{SRS}$=9, $m_{SRS,0}$=32, and it indicates that the first frequency domain resource occupies 32 frequency domain units. When $B_{SRS}$=2, $m_{SRS,2}$=8, and it indicates that each segment of resources in the first frequency domain resource occupies eight frequency domain units. In addition, $N_2$=2 and $N_1$=2, so that it is obtained that 2×2=4, and it indicates that the first frequency domain resource may be divided into four segments. freqDomainPosition=1 and 4. This indicates that the reference signal may correspond to two subbands, one subband occupies a 1st segment of frequency domain resources in the first frequency domain resource, and the other subband occupies a 4th segment of frequency domain resources in the first frequency domain resource. FIG. 8 is a diagram of reference signal distribution corresponding to this example. As shown in FIG. 8, the two subbands of the reference signal are respectively distributed at two ends of the first frequency domain resource.

Similarly, if $C_{SRS}$=9 and $B_{SRS}$=3, as shown in Table 1, in a row corresponding to $C_{SRS}$=9, when $B_{SRS}$=3, $m_{SRS,3}$=4, and it indicates that each segment of resources in the first frequency domain resource occupies four frequency domain units. In addition, $N_3$=2, $N_1$=2, and $N_2$=2, so that it is obtained that 2×2×2=8, and it indicates that the first frequency domain resource may be divided into eight segments. If freqDomainPosition=1, 5, and 8, it indicates that the reference signal may correspond to three subbands, a 1st subband occupies a 1st segment of frequency domain resources in the first frequency domain resource, a 2nd subband occupies a 5th segment of frequency domain resources in the first frequency domain resource, and a 3rd subband occupies an 8th segment of frequency domain resources in the first frequency domain resource. FIG. 9 is a diagram of reference signal distribution corresponding to this example. As shown in FIG. 9, the three subbands of the reference signal are respectively distributed at two ends and a middle part of the first frequency domain resource.

Particularly, if freqDomainPosition=0, it indicates that the reference signal corresponds to one subband, and the subband occupies all of the first frequency domain resource.

For example, for complete content in Table 1, refer to content shown in Table 6.4.1.4.3-1 (Table 6.4.1.4.3-1): SRS bandwidth configuration (SRS bandwidth configuration) table in the protocol 38.211. Certainly, the parameters in Table 1 may alternatively be other values. Content in Table 1 is not specifically limited in embodiments of this application.

For example, the parameter freqDomainPosition may be carried in the first configuration information in the following manner:

freqDomainPosition           SEQUENCE {

    freqDomainPosition1        INTEGER (0..67),

    freqDomainPosition2        INTEGER (0..67),

    }.

freqDomainPosition1 may be any value in (0, ..., 67), for example, may be 1, indicating that a subband 1 occupies a 1st segment of frequency domain resources in the first frequency domain resource. freqDomainPosition2 may be any value in (0, ..., 67), for example, may be 4, indicating that a subband 2 occupies a 4th segment of frequency domain resources in the first frequency domain resource.

For example, the parameter freqHopping may be carried in the first configuration information in the following manner:

freqHopping           SEQUENCE {

    $C_{SRS}$           INTEGER (0..63),

    $B_{SRS}$           INTEGER (0..3),

    }.

$C_{SRS}$ may be any value in (0, ..., 63), and $B_{SRS}$ may be any value in (0, ..., 3). For a specific implementation in which $C_{SRS}$ and $B_{SRS}$ indicate the first frequency domain resource, refer to the foregoing descriptions. Details are not described herein again.

In the foregoing implementation 1, the access network device may configure one first frequency domain resource by using the first indication information, and configure a position of a subband of the reference signal in the first frequency domain resource by using a plurality of sets of corresponding parameters (namely, the second indication information), to configure the reference signal. In a design of configuring the position of the subband of the reference signal in the first frequency domain resource by using the second indication information, for a multi-subband reference signal, resource overheads of separately configuring a frequency domain position and a bandwidth for each subband can be reduced, and the multi-subband reference signal can occupy different frequency domain resources (for example, occupy different RBs) on a same time domain resource (for example, a same symbol).

Implementation 2: The first configuration information includes third indication information, where the third indication information indicates an interval between a frequency domain start position of a subband other than a first subband in the at least two subbands and a frequency domain start position of the first subband.

In this implementation, the first configuration information may include information for configuring a frequency domain resource occupied by the first subband.

Optionally, the first configuration information may indicate the start frequency domain position of the first subband and a size of the frequency domain resource occupied by the first subband. In a possible implementation, the first configuration information may indicate a frequency domain unit including the start time domain position of the first subband and a quantity of frequency domain units occupied by the first subband. For details, refer to the foregoing descriptions in which the first indication information indicates the first frequency domain resource in the implementation 1. Details are not described herein again.

Optionally, the first configuration information may directly or indirectly indicate the quantity of frequency domain units included in the first subband. For details, refer to the foregoing descriptions in which the first indication information indicates the first frequency domain resource in the implementation 1. Details are not described herein again.

Further, the third indication information may indicate a quantity of frequency domain units (which may also be understood as an offset in frequency domain) between the frequency domain start position of the subband other than the first subband and the frequency domain start position of the first subband. For example, assuming that the frequency domain start position of the first subband of the reference signal is an RB 0, and the third indication information may indicate that there are 36 RBs between a frequency domain start position of another subband of the reference signal and the frequency domain start position of the first subband, the terminal device may determine that the frequency domain start position of the subband is an RB 37.

For example, the third indication information may be a parameter freqDomain offset in the first configuration information. For example, if a value of the parameter freqDomain offset is 36, it indicates that there are 36 RBs between the frequency domain start position of the another subband and the frequency domain start position of the first subband.

In this embodiment of this application, the third indication information is in one-to-one correspondence with an indicated subband. In other words, one piece of third indication information indicates an interval between a frequency domain start position of one subband and the frequency domain start position of the first subband. If the reference signal corresponds to at least three subbands (there are at least two subbands other than the first subband), the first configuration information also correspondingly includes at least two pieces of third indication information. For example, if the reference signal corresponds to three subbands, two parameters freqDomain offset may be configured to respectively indicate offsets between start frequency domain positions of remaining two subbands of the three subbands and the start frequency domain position of the first subband.

For example, the parameter freqDomain offset may be carried in the first configuration information in the following manner:

freqDomain offset              SEQUENCE {

offset1-r19                   INTEGER (0..272),

offset2-r19                   INTEGER (0..272).

offset1-r19 may be any value in (0, ..., 272), indicating an offset between a frequency domain start position of a subband 1 and the frequency domain start position of the first subband. offset2-r19 may be any value in (0, ..., 272), indicating an offset between a frequency domain start position of a subband 2 and the frequency domain start position of the first subband.

Optionally, in this implementation, a size of a frequency domain resource occupied by another subband of the reference signal may be the same as the size of the frequency domain resource occupied by the first subband. In other words, information that is included in the first configuration information and that is for configuring the size of the frequency domain resource occupied by the first subband may also be for configuring the size of the frequency domain resource occupied by the another subband. Alternatively, a size of a frequency domain resource occupied by another subband of the reference signal may be different from the size of the frequency domain resource occupied by the first subband. In this case, the first configuration information may further include information for configuring the size of the frequency domain resource occupied by the another subband.

In the foregoing implementation 2, the access network device may configure a multi-subband reference signal by configuring one subband and an offset of another subband relative to the subband. In a design of configuring a frequency domain position of another subband by using an offset indicated by the third indication information, for the multi-subband reference signal, resource overheads of separately configuring a frequency domain position and a bandwidth for each subband can be reduced, and the multi-subband reference signal can occupy different frequency domain resources (for example, occupy different RBs) on a same time domain resource (for example, a same symbol).

The foregoing describes a possible implementation of frequency domain resources occupied by the at least two subbands corresponding to the reference signal configured by using the first configuration information. As described above, in the signal configuration method provided in this embodiment of this application, the configured reference signal can occupy different frequency domain resources on a same time frequency resource. Further, as shown in FIG. 10, if an SRS corresponds to two subbands, and the two subbands occupy only frequency domain resources at two ends of an entire bandwidth and do not occupy a middle part, the SRS may be referred to as a dual-subband reference signal (dual-subband reference signal, DS-RS) (or may have another name, and this is not limited in embodiments of this application). It is verified by a simulation result that when a reference signal such as the DS-RS is designed for positioning, higher-precision carrier phase positioning can be implemented, load can be reduced, and an SINR of an overall signal can be improved. Therefore, based on the signal configuration method provided in this embodiment of this application, the DS-RS can be configured, to implement higher-precision carrier phase positioning, reduce load, and improve an SINR of an overall signal.

Optionally, the first configuration information may further configure signal sequences corresponding to the at least two subbands. In a possible implementation, the first configuration information may further include fourth indication information, where the fourth indication information indicates identification information of the signal sequences (for example, IDs of the signal sequences) corresponding to the at least two subbands, and the identification information of the signal sequence is for generating the signal sequence.

Optionally, the fourth indication information may be in one-to-one correspondence with a subband corresponding to the reference signal, and the first configuration information may indicate, by using a plurality of pieces of fourth indication information, signal sequences corresponding to subbands of the reference signal. Alternatively, one piece of fourth indication information may correspond to a plurality of subbands, to indicate signal sequences corresponding to the plurality of subbands.

For example, the fourth indication information may be a parameter sequenceId in the first configuration information.

For example, the parameter sequenceId may be carried in the first configuration information in the following manner:

| sequenceId-r19 | SEQUENCE { |
| sequenceId1 | INTEGER (0..65535), |
| sequenceId2 | INTEGER (0..65535). |

sequenceId1 may be any value in (0, ..., 65535), indicating an ID of a signal sequence of a subband 1. sequenceId2 may be any value in (0, ..., 65535), indicating an ID of a signal sequence of a subband 2.

Based on this solution, different signal sequences may be configured for different subbands by using different fourth indication information, to reduce a peak-to-average power ratio of an overall signal.

Optionally, the first configuration information may further include fifth indication information, where the fifth indication information indicates comb structure sizes (comb size) corresponding to the at least two subbands of the reference signal. Optionally, the fifth indication information may be in one-to-one correspondence with a subband, and the first configuration information may indicate, by using a plurality of pieces of fifth indication information, comb sizes corresponding to subbands of the reference signal. Alternatively, one piece of fifth indication information may correspond to a plurality of subbands, to indicate comb sizes corresponding to the plurality of subbands.

For example, the fifth indication information may be a parameter comb size in the first configuration information.

Optionally, the first configuration information may further include sixth indication information, where the sixth indication information indicates reference signals corresponding to transmit powers of the at least two subbands of the reference signal. Optionally, the sixth indication information may be in one-to-one correspondence with a subband, and the first configuration information may indicate, by using a plurality of pieces of sixth indication information, reference signals corresponding to transmit powers of subbands of the reference signal. Alternatively, one piece of sixth indication information may correspond to a plurality of subbands, to indicate reference signals corresponding to transmit powers of the plurality of subbands.

For example, the sixth indication information may be a parameter spatialRelationInfoPos in the first configuration information.

Optionally, the first configuration information may further include other information for configuring the reference signal. This is not limited in embodiments of this application.

Optionally, the reference signal configured by using the first configuration information may be used in a carrier phase positioning scenario. In this scenario, after configuring the reference signal based on the first configuration information, the terminal device may send the reference signal to the access network device participating in positioning. Correspondingly, the access network device may measure the received reference signal, and report a measurement result to a core network element. The core network element may perform corresponding calculation based on the measurement result, to obtain a positioning result.

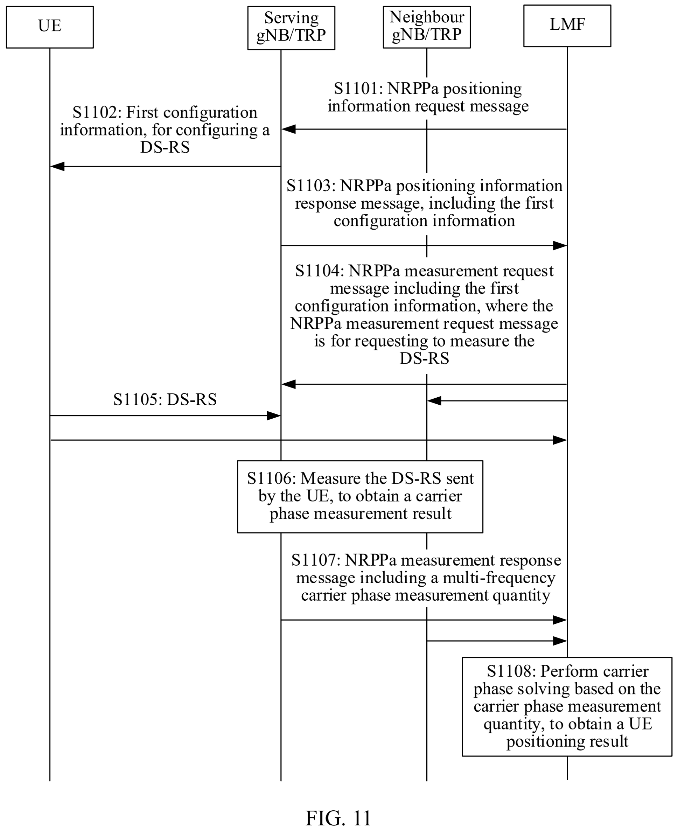

For example, if the signal configuration method provided in this application is applied to a carrier phase positioning scenario, a possible specific carrier phase positioning procedure may be shown in FIG. 11, and includes the following steps.

S1101: An LMF network element sends a positioning information request message (NRPPa Positioning information request) to a serving base station (Serving gNB) of UE according to an NR positioning protocol (NR positioning protocol A, NRPPa), to request to configure an SRS for the UE.

S1102: The serving gNB determines an available DS-RS resource (which is an uplink resource that can be used by the UE to send a DS-RS), and sends first configuration information to the UE, where the first configuration information is for configuring the DS-RS. For details, refer to the foregoing descriptions of S701 and S702. Details are not described herein again.

S1103: The serving gNB reports the first configuration information to the LMF network element by using an NRPPa positioning information response message (NRPPa Positioning information response).

S1104: The LMF network element sends, by using the NRPPa, an NRPPa measurement request message (NRPPa measurement request) including the first configuration information to a neighbour base station (neighbour gNB) participating in positioning, to request to measure the DS-RS.

S1105: The UE sends the DS-RS to the gNBs (the serving gNB and the neighbour gNB) based on the first configuration information.

It should be noted that a time sequence between S1103, S1104, and S1105 shown in FIG. 11 is merely an example of a possible time sequence. The time sequence between S1103, S1104, and S1105 is not limited in embodiments of this application.

S1106: The gNBs (the serving gNB and the neighbour gNB) measure the DS-RS sent by the UE, to obtain a carrier phase measurement result.

S1107: The gNBs (the serving gNB and the neighbour gNB) report a multi-frequency carrier phase measurement quantity to the LMF network element based on the carrier phase measurement result by using an NRPPa measurement response message (NRPPa measurement response).

S1108: The LMF network element performs carrier phase solving based on the carrier phase measurement quantity, to obtain a UE positioning result.

It may be understood that, in the foregoing embodiments, the methods and/or the steps implemented by the devices may alternatively be implemented by a component (for example, a processor, a chip, a chip system, a circuit, a logic module, or software, for example, a chip or a circuit) that can be used in the devices.

The foregoing mainly describes the solutions provided in this application from a perspective of interaction between the devices. Correspondingly, this application further provides a communication apparatus, and the communication apparatus is configured to implement the foregoing methods. The communication apparatus may be the terminal device or the access network device in the foregoing method embodiments, or an apparatus including the foregoing device, or a component that can be used in the foregoing device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

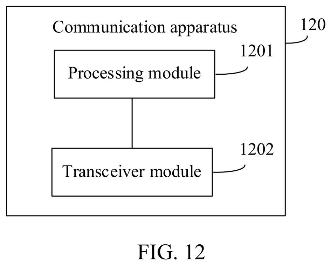

FIG. 12 is a diagram of a structure of a communication apparatus 120. For example, as shown in FIG. 12, the communication apparatus 120 includes a transceiver module 1202 and a processing module 1201. For ease of descriptions, FIG. 12 shows only main components of the communication apparatus.

In some embodiments, the communication apparatus 120 may further include a storage module (not shown in FIG. 12), configured to store program instructions and data.

In some embodiments, the transceiver module 1202 may also be referred to as a transceiver unit, and is configured to implement a sending function and/or a receiving function. The transceiver module 1202 may include a transceiver circuit, a transceiver machine, a transceiver, or a communication interface.

In some embodiments, the transceiver module 1202 may include a receiving module and a sending module, respectively configured to perform receiving steps and sending steps performed by the terminal device or the access network device in the foregoing method embodiments, and/or configured to support another process of the technology described in this specification. The processing module 1201 may be configured to perform processing (for example, determining and generating) steps performed by the terminal device or the access network device in the foregoing method embodiments, and/or configured to support another process of the technology described in this specification.

When the communication apparatus 120 is configured to implement the functions of the foregoing terminal device:

the transceiver module 1202 is configured to receive first configuration information, and the processing module 1201 is configured to configure a reference signal based on the first configuration information, where the reference signal corresponds to at least two subbands on a same time domain resource, and adjacent subbands in the at least two subbands are separated in frequency domain by at least one frequency domain unit.

When the communication apparatus 120 is configured to implement the functions of the foregoing access network device:

the processing module 1201 is configured to generate first configuration information, and the transceiver module 1202 is configured to send the first configuration information, where the first configuration information is for configuring a reference signal, the reference signal corresponds to at least two subbands on a same time domain resource, and adjacent subbands in the at least two subbands are separated in frequency domain by at least one frequency domain unit.

All related content of the steps in the foregoing method embodiments may be cited in function descriptions of the corresponding functional modules. Details are not described herein again.

In this application, the communication apparatus 120 is presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 120 in FIG. 12 is a chip or a chip system, a functions or implementation process of the transceiver module 1202 may be implemented through an input/output interface (or a communication interface) of the chip or the chip system, and a function/implementation process of the processing module 1201 may be implemented by using a processor (or a processing circuit) of the chip or the chip system.

Because the communication apparatus 120 provided in this embodiment may perform the foregoing methods, for a technical effect that can be achieved by the communication apparatus 120, refer to the foregoing method embodiments. Details are not described herein again.

In a possible product form, the communication apparatus 120 may be implemented by using one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described throughout this application.

In some embodiments, in terms of hardware implementation, a person skilled in the art may figure out that the communication apparatus 120 may be in a form of the communication apparatus 600 shown in FIG. 6.

In an example, a function/implementation process of the processing module 1201 in FIG. 12 may be implemented by the processor 601 in the communication apparatus 600 shown in FIG. 6 by invoking the computer-executable instructions stored in the memory 603. A function/implementation process of the transceiver module 1202 in FIG. 12 may be implemented by the communication interface 604 in the communication apparatus 600 shown in FIG. 6.

It should be noted that the structure shown in FIG. 6 does not constitute a specific limitation on a device structure. For example, in some other embodiments of this application, the devices may include more or fewer components than those shown in the figure, or may combine some components, or may split some components, or may have different component arrangements. The components shown in the figure may be implemented by hardware, software, or a combination of the software and the hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, a function of any one of the foregoing method embodiments is implemented.

This application further provides a computer program product. When the computer program product is executed by a computer, a function of any one of the foregoing method embodiments is implemented.

A person of ordinary skill in the art may understand that, for the purpose of convenient and brief description, for a detailed working process of the foregoing system, apparatus, and unit, refer to a corresponding process in the foregoing method embodiment. Details are not described herein again.

It may be understood that the system, apparatus, and method described in this application may alternatively be implemented in another manner. For example, the described apparatus embodiments are merely examples. For example, division into the units is merely logical function division. During actual implementation, another division may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be physically separated or not, in other words, may be located together in a same place or distributed on a plurality of network units. Parts displayed as units may be or may not be physical units. All or a part of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or a part of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A signal configuration method, wherein the method comprises:

   receiving first configuration information; and
   configuring a reference signal based on the first configuration information, wherein the reference signal corresponds to at least two subbands on a same time domain resource, and adjacent subbands in the at least two subbands are separated in frequency domain by at least one frequency domain unit.

2. A signal configuration method, wherein the method comprises:

   generating first configuration information; and
   sending the first configuration information, wherein the first configuration information is for configuring a reference signal, the reference signal corresponds to at least two subbands on a same time domain resource, and adjacent subbands in the at least two subbands are separated in frequency domain by at least one frequency domain unit.

3. The method according to claim 1 or 2, wherein

   the first configuration information comprises first indication information, wherein the first indication information indicates a first frequency domain resource; and
   the first configuration information further comprises second indication information, wherein the second indication information indicates positions of the at least two subbands in the first frequency domain resource.

4. The method according to claim 1 or 2, wherein the first configuration information comprises third indication information, wherein the third indication information indicates an interval between a frequency domain position of a subband other than a first subband in the at least two subbands and a frequency domain position of the first subband.

5. The method according to any one of claims 1 to 4, wherein the first configuration information comprises fourth indication information, wherein the fourth indication information indicates identification information of signal sequences corresponding to the at least two subbands, and the identification information of the signal sequence is for generating the signal sequence.

6. The method according to any one of claims 1 to 5, wherein the first configuration information comprises at least one of fifth indication information and sixth indication information, wherein the fifth indication information indicates comb structure sizes corresponding to the at least two subbands, and the sixth indication information indicates reference signals corresponding to transmit powers of the at least two subbands.

7. The method according to any one of claims 1 to 6, wherein each of the at least two subbands occupies a same quantity of frequency domain units.

8. The method according to any one of claims 1 to 7, wherein the at least two subbands are located in a same bandwidth part BWP.

9. A communication apparatus, wherein the apparatus comprises a transceiver module and a processing module, wherein

the transceiver module is configured to receive first configuration information; and

the processing module is configured to configure a reference signal based on the first configuration information, wherein the reference signal corresponds to at least two subbands on a same time domain resource, and adjacent subbands in the at least two subbands are separated in frequency domain by at least one frequency domain unit.

10. A communication apparatus, wherein the apparatus comprises a transceiver module and a processing module, wherein

the processing module is configured to generate first configuration information; and

the transceiver module is configured to send the first configuration information, wherein the first configuration information is for configuring a reference signal, the reference signal corresponds to at least two subbands on a same time domain resource, and adjacent subbands in the at least two subbands are separated in frequency domain by at least one frequency domain unit.

11. The apparatus according to claim 9 or 10, wherein

the first configuration information comprises first indication information, wherein the first indication information indicates a first frequency domain resource; and

the first configuration information further comprises second indication information, wherein the second indication information indicates positions of the at least two subbands in the first frequency domain resource.

12. The apparatus according to claim 9 or 10, wherein the first configuration information comprises third indication information, wherein the third indication information indicates an interval between a frequency domain position of a subband other than a first subband in the at least two subbands and a frequency domain position of the first subband.

13. The apparatus according to any one of claims 9 to 12, wherein the first configuration information comprises fourth indication information, wherein the fourth indication information indicates identification information of signal sequences corresponding to the at least two subbands, and the identification information of the signal sequence is for generating the signal sequence.

14. The apparatus according to any one of claims 9 to 12, wherein the first configuration information comprises at least one of fifth indication information and sixth indication information, wherein the fifth indication information indicates comb structure sizes corresponding to the at least two subbands, and the sixth indication information indicates reference signals corresponding to transmit powers of the at least two subbands.

15. The apparatus according to any one of claims 9 to 12, wherein each of the at least two subbands occupies a same quantity of frequency domain units.

16. The apparatus according to any one of claims 9 to 12, wherein the at least two subbands are located in a same bandwidth part BWP.

17. A communication apparatus, wherein the communication apparatus comprises a processor, the processor is configured to execute instructions stored in a memory, and when the instructions are run by the processor, the communication apparatus is caused to perform the method according to any one of claims 1 to 8.

18. A computer-readable storage medium, wherein the computer-readable storage medium stores instructions, and when the instructions are executed by a computer, the method according to any one of claims 1 to 8 is performed.

19. A computer program product, wherein the computer program product comprises instructions, and when the instructions are executed by a computer, the method according to any one of claims 1 to 8 is performed.

20. A chip, wherein the chip comprises a processor, and the processor is configured to run instructions, to cause an apparatus comprising the chip to perform the method according to any one of claims 1 to 8.

21. The chip according to claim 20, wherein the chip further comprises a memory, and the memory is configured to store the instructions.

22. A communication system, wherein the communication system comprises a terminal device and an access network device, the terminal device is configured to perform the method according to any one of claim 1 or claims 3 to 8, and the access network device is configured to perform the method according to any one of claims 2 to 8.

FIG. 1

FIG. 2

FIG. 3

FIG. 4

Communication
system 10

Access
network
device 20

Terminal
device 30

Terminal
device 30

(a)

Communication
system 10

Access
network
device 20

Access
network
device 20

Access
network
device 20

Terminal
device 30

(b)

FIG. 5

EP 4 730 687 A1

600

601    608    603

Processor    Processor

CPU 0    CPU 0

CPU 1    CPU 1

602

604    605    606

Communication
interface    Output
device    Input
device    Memory

**FIG. 6**

Access network
device    Terminal
device

S701: First configuration information,
for configuring a reference signal

S702

Configure the reference signal based on the first
configuration information, where the reference signal
corresponds to at least two subbands on a same time
domain position, and adjacent subbands in the at least
two subbands are separated in frequency domain by at
least one frequency domain unit

**FIG. 7**

FIG. 8

FIG. 9

FIG. 10

```
   UE              Serving          Neighbour          LMF
                   gNB/TRP          gNB/TRP
                           S1101: NRPPa positioning
                          information request message
        S1102: First configuration
      information, for configuring a
               DS-RS
                      S1103: NRPPa positioning information
                       response message, including the first
                              configuration information

                      S1104: NRPPa measurement request
                         message including the first
                       configuration information, where the
                      NRPPa measurement request message
                        is for requesting to measure the
                                    DS-RS

           S1105: DS-RS

                          S1106: Measure the DS-RS sent
                           by the UE, to obtain a carrier
                           phase measurement result

                      S1107: NRPPa measurement response
                       message including a multi-frequency
                        carrier phase measurement quantity

                                          S1108: Perform carrier
                                         phase solving based on the
                                         carrier phase measurement
                                          quantity, to obtain a UE
                                            positioning result
```

FIG. 11

Communication apparatus 120

Processing module 1201

Transceiver module 1202

FIG. 12

## INTERNATIONAL SEARCH REPORT

| International application No. |
|---|
| **PCT/CN2024/107117** |

| A. | CLASSIFICATION OF SUBJECT MATTER |
|---|---|

H04L 5/00(2006.01)i

According to International Patent Classification (IPC) or to both national classification and IPC

| B. | FIELDS SEARCHED |
|---|---|

Minimum documentation searched (classification system followed by classification symbols)

IPC:H04L G06F

Documentation searched other than minimum documentation to the extent that such documents are included in the fields searched

Electronic data base consulted during the international search (name of data base and, where practicable, search terms used)

CNABS; 3GPP: CNTXT; ENTXTC; DWPI; USTXT; WOTXT; EPTXT: 参考信号, 隔着, 间隔, 距离, 频域, 时域, 同样, 相隔, 相同, 一个, 子带, freqhopping, PRS, SAME, slot, SRS, symbol, slot?, subband?, Interval+, Frequency domain, freq+, symbol?

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116800391 A (HUAWEI TECHNOLOGIES CO., LTD.) 22 September 2023 (2023-09-22) description, paragraphs [0094]-[0172] | 1-22 |
| X | CN 108964856 A (ZTE CORP.) 07 December 2018 (2018-12-07) description, paragraphs [0007]-[0024] and [0166]-[0248] | 1-22 |
| A | CN 111490860 A (HUAWEI TECHNOLOGIES CO., LTD.) 04 August 2020 (2020-08-04) entire document | 1-22 |
| A | WO 2018126931 A1 (HUAWEI TECHNOLOGIES CO., LTD.) 12 July 2018 (2018-07-12) entire document | 1-22 |
| A | LG ELECTRONICS. "Remaining Issues on SRS" *3GPP TSG RAN WG1 Meeting #92bis, R1-1804548*, 07 April 2018 (2018-04-07), entire document | 1-22 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 October 2024** | **21 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/107117**

| Patent document cited in search report | | | Publication date (day/month/year) | Patent family member(s) | | | Publication date (day/month/year) |
|---|---|---|---|---|---|---|---|
| CN | 116800391 | A | 22 September 2023 | None | | | |
| CN | 108964856 | A | 07 December 2018 | EP | 3633901 | A1 | 08 April 2020 |
| | | | | EP | 3633901 | A4 | 24 March 2021 |
| | | | | EP | 3633901 | B1 | 15 February 2023 |
| | | | | WO | 2018219074 | A1 | 06 December 2018 |
| CN | 111490860 | A | 04 August 2020 | WO | 2020143689 | A1 | 16 July 2020 |
| WO | 2018126931 | A1 | 12 July 2018 | US | 2019327065 | A1 | 24 October 2019 |
| | | | | US | 10892878 | B2 | 12 January 2021 |
| | | | | JP | 2020507947 | A | 12 March 2020 |
| | | | | EP | 3557806 | A1 | 23 October 2019 |
| | | | | EP | 3557806 | A4 | 18 December 2019 |
| | | | | EP | 3557806 | B1 | 31 July 2024 |

Form PCT/ISA/210 (patent family annex) (July 2022)

**EP 4 730 687 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310922332